# EUROPÄISCHE PATENTANMELDUNG

(11) **EP 2 289 342 A1**
(43) Veröffentlichungstag der Anmeldung: **02.03.2011**
(21) Anmeldenummer: 09168790.5
(22) Anmeldetag: 27.08.2009
(51) Int. Cl.: A23C 3/07, A23L 3/005, A23L 3/22, H05B 6/60, A23L 2/48, A23C 3/033

(54) **Vorrichtung und Verfahren zum Erhitzen eines strömenden Produkts**

(71) Anmelder: INDAG Gesellschaft für Industriebedarf mbH & Co. Betriebs KG, 69214 Eppelheim (DE)
(72) Erfinder: Wild, Hans-Peter, 69214, Eppelheim (DE); Tilz, Wolfgang, 68723, Schwetzingen (DE); de With, Axel, Dr., 68723 Plankstadt (DE); Chatard, Dominique, 69121 Heidelberg (DE)
(74) Vertreter: Grünecker, Kinkeldey, Stockmair & Schwanhäusser Anwaltssozietät

(57) **Zusammenfassung**

Die Erfindung betrifft eine Vorrichtung und ein Verfahren zum Erhitzen eines strömenden Produkts, insbesondere eines Grundstoffs für die Getränkeindustrie, und insbesondere eines Milch- oder Milchmischgetränks. Dadurch, dass, in einem Heizmodul ein Behandlungskanal zwischen Wechselstromelektroden derart ausgebildet ist, dass das Produkt im Wesentlichen in einer Hauptströmungsrichtung von der ersten Elektrode zur zweiten Elektrode fließt, können der Elektrodenabstand und der Querschnitt des Behandlungskanals weitgehend unabhängig von einander dimensioniert und damit der Energieeintrag in das Produkt sowie dessen Strömungsverhalten optimiert werden. Dies begünstigt eine gleichmäßige Erhitzung des Produkts und hilft, unerwünschte Ablagerungen im Behandlungskanal zu vermeiden.

## Beschreibung

Die Erfindung betrifft eine Vorrichtung und ein Verfahren zum Erhitzen eines strömenden Produkts, insbesondere eines Grundstoffs für die Getränkeindustrie, und insbesondere eines Milch- oder Milchmischgetränks, nach dem Oberbegriff des Anspruchs 1 bzw. 12.

Es ist allgemein bekannt, die Haltbarkeit flüssiger Produkte zu erhöhen, indem durch Erhitzen Keime und/oder Sporen abgetötet und/oder Enzyme inaktiviert werden.

Die Patentschrift EP 1 387 240 B1 beschreibt hierzu eine Vorrichtung, bei der ein Wechselstromfeld zwischen quer zur Strömungsrichtung des Produkts an der Innenseite eines Behandlungskanals angeordneten Elektrodenpaaren erzeugt wird. Der Querschnitt des Kanals ist für eine laminare Strömung ausgelegt, um im Produkt möglichst wenig Scherung zu verursachen. Diese Anordnung ermöglicht eine besonders schonende Behandlung und eignet sich beispielsweise für Mischprodukte mit Fruchtstücken.

Bei der Auslegung bzw. Anwendung dieser Anordnung treten jedoch Probleme auf, da der benötigte Energieeintrag sowohl vom elektrischen Leitwert des Produkts, dem Strömungsverhalten des Produkts im Kanal und der Produkttemperatur als auch von der lichten Weite zwischen den Wechselstromelektroden abhängt. Diese wiederum beeinflusst das Strömungsverhalten des Produkts. Bei hohen Leitwerten und Produkttemperaturen muss der Abstand zwischen den Elektroden dann unter Umständen so weit erhöht werden, dass sich die Produktströmung nicht in der gewünschten Weise kontrollieren lässt. Dies kann beispielsweise eine ungleichmäßige Produkterwärmung zur Folge haben und/oder unerwünschte Ablagerungen im Behandlungskanal, das sogenannte Fouling.

Da das Produkt üblicherweise mehrere Erhitzerstufen durchläuft und der Elektrodenabstand aus den oben genannten Gründen mitunter nicht an die jeweils abzudeckenden Temperaturbereiche angepasst werden kann, müssen einzelne Erhitzerstufen von gesonderten, für den jeweiligen Temperaturbereich ausgelegten Wechselstromgeneratoren versorgt werden. Dies verursacht einen erheblichen apparativen Aufwand.

Außerdem lassen sich viele Produkte gleichmäßiger und effizienter erwärmen, wenn in diesen bei hohen Strömungsgeschwindigkeiten Scherung auftritt. Dadurch kann vermieden werden, dass die Produktqualität, insbesondere Farbe, Geschmack, Proteingehalt und Konsistenz im Vergleich zum Ausgangsprodukt merklich leidet. Mit den bekannten Vorrichtungen lassen sich geeignete starke bzw. turbulente Strömungen jedoch nicht zufriedenstellend erzeugen.

Es ist daher Aufgabe der Erfindung, eine verbesserte Vorrichtung bzw. ein verbessertes Verfahren zum Erhitzen von strömenden Produkten bereitzustellen, insbesondere für Flüssigkeiten, die bei einer hohen und turbulenten Strömung besser erwärmt werden können, um das Produkt möglichst zuverlässig, effizient und schonend haltbar zu machen.

Diese Aufgabe wird mit einer Vorrichtung gelöst, die ein Heizmodul umfasst, bei dem der Behandlungskanal zwischen den Elektroden derart ausgebildet ist, dass das Produkt im Wesentlichen in einer Hauptströmungsrichtung von der ersten Elektrode zur zweiten Elektrode fließt. Dadurch können der Elektrodenabstand und der Querschnitt des Behandlungskanals weitgehend unabhängig von einander dimensioniert und damit der Energieeintrag in das Produkt sowie dessen Strömungsverhalten optimiert werden.

Vorzugsweise sind die Elektroden im Wesentlichen als plattenförmige Deckel ausgebildet, die in und/oder auf den Enden des Behandlungskanals sitzen und diesen verschließen. Dies gewährleistet einen gleichmäßigen Energieeintrag über die Länge und den Querschnitt des Behandlungskanals.

Eine besonders günstige Ausführungsform umfasst ferner einen seitlich in den Behandlungskanal mündenden Eintrittskanal mit einem Abschnitt, der an die Wand des Behandlungskanals derart anschließt, dass das Produkt im Wesentlichen tangential an der Wand des Behandlungskanals entlang einströmt. Dies bewirkt zusammen mit der Hauptströmungsrichtung des Produkt eine im Wesentlichen schraubenförmige Produktströmung entlang der Wand des Behandlungskanals. Auf diese Weise lässt sich eine starke Strömung auch bei großen Elektrodenabständen erzeugen, wodurch das Produkt effizient und gleichmäßig erwärmt und das Entstehen unerwünschter Ablagerungen erschwert wird.

Vorzugsweise ist der Querschnitt des Eintrittskanals umso viel kleiner als der Querschnitt des Behandlungskanals, dass das Produkt im Wesentlichen nur auf einer Seite der Hauptachse des Behandlungskanals einströmt. Dadurch wird eine schraubenförmige Produktströmung mit im Wesentlichen einheitlichem Drehsinn erzeugt. Die Strömung des Produkts lässt sich so besser kontrollieren und erzeugt einen geringeren Druckverlust im Kanal.

Vorzugsweise beträgt der Abstand zwischen dem Eintrittskanal und der eingangsseitigen Elektrode höchstens 1 mm. Dadurch werden Bereiche mit schwacher Anströmung vermieden, wodurch das Auftreten von Ablagerungen weiter erschwert bzw. der Selbstreinigungseffekt der Vorrichtung verbessert wird.

Eine besonders günstige Ausführungsform umfasst ferner einen seitlich in den Behandlungskanal mündenden Austrittskanal mit einem Abschnitt, der an die Wand des Behandlungskanals derart anschließt, dass das Produkt im Wesentlichen tangential an der Wand des Behandlungskanals entlang ausströmt. Dadurch werden Druckverluste in der Vorrichtung minimiert.

Vorzugsweise ist im Behandlungskanal eine schraubenförmige Vertiefung ausgebildet, die das Produkt in der Hauptströmungsrichtung einer Schraubenlinie folgend an der Innenwand des Behandlungskanals entlang leitet. Dadurch kann eine schraubenförmige Produktströmung erzeugt und/oder stabilisiert sowie gerichtet in den Austrittskanal bzw. gegen die austrittsseitige Elektrode geleitet werden. Die Produktströmung kann damit besonders gut und kontrolliert gesteuert werden.

Vorzugsweise sind in einer ersten Außenseitenfläche des Heizmoduls eine Eintrittsöffnung für das Produkt und in einer zweiten, entgegen gesetzten Außenseitenfläche eine Austrittsöffnung für das Produkt derart ausgebildet, dass mindestens zwei Heizmodule an den Seitenflächen aneinander gereiht werden können, so dass die Austrittsöffnung des ersten Heizmoduls gegenüber der Eintrittsöffnung des zweiten Heizmoduls zu liegen kommt, um die Behandlungskanäle der Heizmodule in Reihe zu verbinden, wobei die Hauptströmungsrichtungen des ersten und des zweiten Heizmoduls im Wesentlichen einander entgegen gesetzt sind. Dadurch lässt sich eine kompakte Heizstufe bestehend aus mehreren identischen Heizmodulen mit wenigen Verbindungselementen herstellen.

Vorzugsweise beträgt der Abstand zwischen den Elektroden 20 bis 500 mm. Damit kann das Heizmodul sowohl an unterschiedliche Produkttemperaturen als auch Produktleitwerte angepasst werden, ohne die elektrische Versorgung, insbesondere die elektrische Leistung und die Wechselstromfrequenz, ändern zu müssen.

Eine besonders günstige Ausführungsform umfasst mindestens zwei bezüglich des Produktstroms in Reihe geschaltete Heizstufen mit jeweils mindestens einem Heizmodul, wobei der Abstand zwischen den Elektroden einer Heizstufe im Wesentlichen gleich groß und um so größer ist, je höher die mittlere Produkttemperatur in der jeweiligen Heizstufe ist. Dadurch kann das Produkt auch über einen großen Temperaturbereich stufenweise erhitzt und die Heizstufen an die Produkttemperatur ohne Änderung der elektrischen Versorgung angepasst werden.

Vorzugsweise sind die Elektroden der Heizmodule unterschiedlicher Heizstufen parallel an die Wechselstromquelle angeschlossen. Dies vereinfacht die Energieversorgung der Vorrichtung.

Die technische Aufgabe wird ferner gelöst mit einem Verfahren, bei dem das Produkt im Wesentlichen in einer Hauptströmungsrichtung von der ersten Elektrode zur zweiten Elektrode fließt. Dadurch können der Elektrodenabstand und der Querschnitt des Behandlungskanals weitgehend unabhängig von einander dimensioniert und damit der Energieeintrag in das Produkt sowie dessen Strömungsverhalten optimiert werden.

Vorzugsweise wird in dem Behandlungskanal eine schraubenförmige Produktströmung erzeugt. Dadurch kann auch bei großem Elektrodenabstand eine ausreichend starke Strömung gewährleistet werden. Eine solche Produktströmung ist besonders gut kontrollierbar und bewirkt eine effiziente Produkterwärmung und einen Selbstreinigungseffekt bzw. vermeidet unerwünschte Ablagerungen im Behandlungskanal.

Vorzugsweise wird der Abstand zwischen den Elektroden an die mittlere Produkttemperatur im Behandlungskanal angepasst, um mehrere, produktseitig in Reihe geschaltete Heizmodule mit unterschiedlicher mittlerer Produkttemperatur an einer gemeinsamen Wechselstromquelle zu betreiben. Dies verringert den apparativen Aufwand und erleichtert die Kontrolle des Behandlungsprozesses.

Vorzugsweise wird der Abstand zwischen den Elektroden an den elektrischen Leitwert des Produkts angepasst, wobei der Leitwert 30 µS bis 10⁵ µS betragen kann. Dadurch können unterschiedliche Produkte mit einem einheitlichen Wechselstromgenerator erhitzt werden.

Bevorzugte Ausführungsformen sind in der Zeichnung dargestellt. Es zeigen:
- Fig. 1: eine schematische Darstellung einer ersten Ausführungsform mit einem Heizmodul im Schnitt entlang der Linie C - C aus Figur 3 von oben gesehen;
- Fig. 2: eine n schematischen Querschnitt des Heizmoduls der ersten Ausführungsform, ent- lang der Schnittlinie A - A aus Figur 1;
- Fig. 3: einen schematischen Querschnitt des Heizmoduls der ersten Ausführungsform, ent- lang der Schnittlinie B - B aus Figur 1;
- Fig. 4: eine n schematischen Teilschnitt einer Heizstufe einer zweiten Ausführungsform mit mehreren, in Reihe geschalteten Heizmodulen, von oben gesehen entlang der Schnittlinie E - E aus Figur 5; und
- Fig. 5: eine n schematischen Teilschnitt der Heizstufe aus Figur 4, von vorne gesehen ent- lang der Schnittlinie D - D.

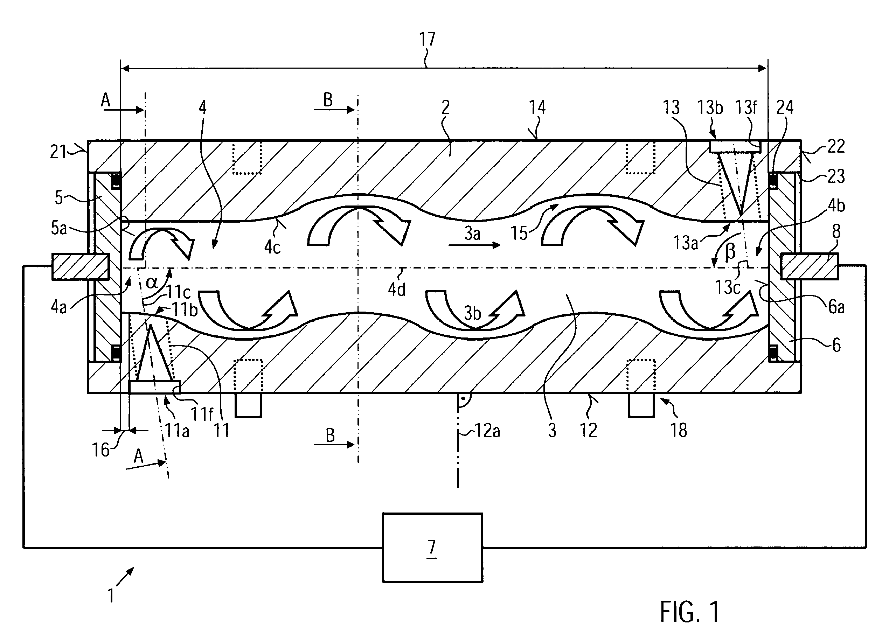

Wie Figur 1 erkennen lässt, umfasst die erfindungsgemäße Vorrichtung 1 ein Heizmodul 2 mit einem Produkt 3 führenden Behandlungskanal 4 mit eintrittsseitigen und austrittsseitigen Enden 4a, 4b, der sich im Wesentlichen zwischen Elektroden 5, 6 zum Erzeugen eines elektromagnetischen Wechselfelds im Behandlungskanal 4 erstreckt. Der Pfeil 3a gibt die Hauptströmungsrichtung des Produkts 3 an. Eine Wechselstromquelle 7 ist über Elektrodenanschlüsse 8 mit den Elektroden 5, 6 verbunden.

Zum Zuführen des Produkts 3 ist im Heizmodul 2 ein seitlicher Eintrittskanal 11 mit einer Eintrittsöffnung 11a in einer ersten seitlichen, im Wesentlichen zur Hauptströmungsrichtung 3a parallelen Außenfläche 12 des Heizmoduls 2 vorgesehen sowie ein seitlicher Austrittskanal 13 mit einer Austrittsöffnung 13b in einer zweiten seitlichen, der ersten Außenfläche 12 gegenüber liegenden und zu dieser vorzugsweise parallelen Außenfläche 14. Externe Anschlüsse und Leitungen für das Produkt 3 sind der Übersichtlichkeit halber nicht dargestellt.

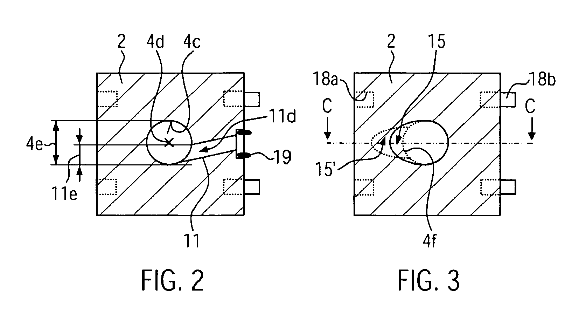

Aus Figur 2 wird ferner deutlich, dass zumindest ein Wandbereich 11d des Eintrittskanals 11 bündig an die Wand 4c des Behandlungskanals 4 anschließt, so dass das Produkt 3 im Wesentlichen tangential zur Wand 4c eingeleitet wird und anschließend an dieser entlang fließt. Aufgrund des kontinuierlich nachströmenden Produkts 3 ergibt sich daraus in Kombination mit der Hauptströmungsrichtung 3a eine im Wesentlichen schraubenförmige Strömung 3b um die Längsachse 4d des Behandlungskanals 4 in Richtung des austrittsseitigen Kanalabschnitts 4b.

Um die Strömung 3b mit einem einheitlichen Drehsinn herzustellen, ist der Querschnitt des Eintrittskanals 11 mindestens umso viel kleiner als der Querschnitt des Behandlungskanals 4, dass das Produkt 3 im Wesentlichen nur auf einer Seite der Hauptachse 4d des Behandlungskanals einströmt. Im Ausführungsbeispiel beträgt die Höhe 11 e des Eintrittskanals 11 entsprechend vorzugsweise maximal die Hälfte der Höhe 4e des Behandlungskanals 4, so dass das Produkt in diesem Fall unterhalb der Hauptachse 4d einströmt (wobei sich die Angaben "Höhe" bzw. "unten" lediglich auf die Darstellung in der Zeichnung beziehen). Der Querschnitt des Eintrittskanals 11 ist beispielsweise rund, kann jedoch auch rechteckig sein, vorzugsweise mit abgerundeten Ecken. Mit einem im Wesentlichen rechteckigen Querschnitt kann ein größerer bündiger bzw. tangentialer Übergangsbereich zwischen dem Eintrittskanal 11 und dem Behandlungskanal 4 verwirklicht werden als mit einem runden Querschnitt. Dies gilt gleichermaßen für den Querschnitt des Austrittskanals 13.

In der Wand 4c des Behandlungskanals 4 ist eine schraubenförmige Vertiefung 15 ausgebildet, die das Produkt 3 im Wesentlichen einer Schraubenlinie folgend vom Eintrittskanal 11 an der Wand 4c entlang bis zum Austrittskanal 13 leitet. Die Vertiefung 15 ist so ausgelegt, dass sie die durch das tangentiale Einströmen des Produkts 3 eingeleitete schraubenförmige Produktströmung 3b aufrechterhält bzw. stabilisiert. In Figur 1 ist mit den gewundenen Pfeilen dargestellt, dass sich die Produktströmung 3b in der Hauptströmungsrichtung 3a um die Längsachse 4d des Behandlungskanals 4 windet.

Unter der schraubenförmigen Vertiefung 15 ist ein Bereich zu verstehen, in dem der Querschnitt des Behandlungskanals 4 von einem kreisförmigen Querschnitt 4f nach außen hin abweicht. Dies wird vorzugsweise mit einem ovalen Querschnitt, bei dem die Vertiefung 15 stetig in den kreisförmigen Querschnitt 4f übergeht, verwirklicht, wie in Figur 3 durch die durchgezogene Linie dargestellt. Möglich ist aber auch eine abgerundete Rinne in der Wand 4c, wie in Figur 3 durch die gestrichelte Ausbuchtung 15' angedeutet. Der Querschnitt der Vertiefung 15 kann im Verlauf des Behandlungskanals 4 auch variieren, insbesondere an dessen eintritts- bzw. austrittsseitigen Bereichen 4a, 4b, beispielsweise um ein tangentiales Einströmen des Produkts 3 zu gewährleisten, insbesondere mit Hilfe eines möglichst bündigen Übergangs des Eintrittskanals 11 in den Behandlungskanal 4, und um die schraubenförmige Produktströmung 3b möglichst gebündelt zum Austrittskanal 13 zu leiten.

Die Hauptachse 11c des Eintrittskanals 11 im Bereich seiner Austrittsöffnung 11b sowie die Hauptachse 13c des Austrittskanals 13 im Bereich seiner Eintrittsöffnung 13a bilden mit der Hauptströmungsrichtung 3a einen Anschlusswinkel α bzw. β von 10 bis 170°, vorzugsweise 90°, je nach gewünschter Anströmung der eintritts- bzw. austrittsseitigen Kanalbereiche 4a, 4b. So kann der Eintrittskanal 11 auf die Elektrode 5 gerichtet sein, wie in Figur 1 angedeutet, um eine besonders gute Anströmung der produktseitigen Elektrodenoberfläche 5a zu gewährleisten. Andererseits kann es vorteilhaft sein, den Anschlusswinkel β des Austrittskanals 13 so auszulegen, dass die schraubenförmige Produktströmung 3b mit möglichst geringem Druckverlust vom Austrittskanal 13 aufgenommen und weitergeleitet wird. Aus herstellungstechnischer Sicht sind identische Anschlusswinkel α und β wünschenswert, insbesondere ein Wert von 90°.

Um Druckverluste in der Vorrichtung 1 zu minimieren, werden der Verlauf der Vertiefung 15 und die Position der Eintrittsöffnung 13a des Austrittskanals 13 so ausgelegt, dass die schraubenförmige Produktströmung 3b im Wesentlichen auf den Austrittskanal 13 trifft. In diesem Zusammenhang ist es auch vorteilhaft, wenn ein Wandbereich 13d (nicht gezeigt) des Austrittskanals 13 in Analogie zum Wandbereich 11d des Eintrittskanals 11 bündig in die Kanalwand 4c übergeht.

Um Toträume bzw. Bereiche mit geringer Anströmung im Heizmodul 2 zu vermeiden, beträgt der Abstand 16 zwischen den Elektroden 5, 6 und dem Eintrittskanal 11 bzw. dem Austrittskanal 13 vorzugsweise nicht mehr als 1 mm. Das Anströmen der mit dem Produkt 3 in Kontakt kommenden Bereiche des Heizmoduls 2 mit ausreichend starker bzw. turbulenter Strömung bewirkt eine Selbstreinigung der Vorrichtung 1, die unerwünschte Produktablagerungen vermeidet.

In den eintritts- bzw. austrittsseitigen Stirnflächen 21, 22 des Heizmoduls 2 ist jeweils eine Ausnehmung 23, wie z. B. eine Nut, zur Aufnahme der Elektroden 5, 6 ausgebildet. Diese sind darin vorzugsweise rechtwinklig zur Hauptströmungsrichtung 3a bzw. zur Längsachse 4d des Behandlungskanals 4 angeordnet. Die Elektroden 5, 6 können den Behandlungskanal 4 beidseitig wie ein Deckel abschließen. Insbesondere bei einem dichten Abschluss der Elektroden 5, 6 mit der Ausnehmung 23, beispielsweise mit Hilfe dazwischen vorgesehener Dichtungen 24, können die Querschnitte der Endabschnitte 4a, 4b des Behandlungskanals 4 flexibel gestaltet werden. Im Beispiel der Figur 1 ist der Querschnitt am eingangsseitigen Ende 4a rund, also ohne die Vertiefung 15, während diese am ausgangsseitigen Ende 4b ausgebildet ist. Hier sind beliebige Querschnittsvarianten denkbar. Die Elektroden 5, 6 können auch teilweise in den Behandlungskanal 4 hineinragen, so dass sie zusätzlich an dessen Wand 4c anliegen. Entscheidend ist, dass die produktseitigen Elektrodenoberflächen 5a, 6a direkt an die Wand 4c des Behandlungskanals 4 anschließen.

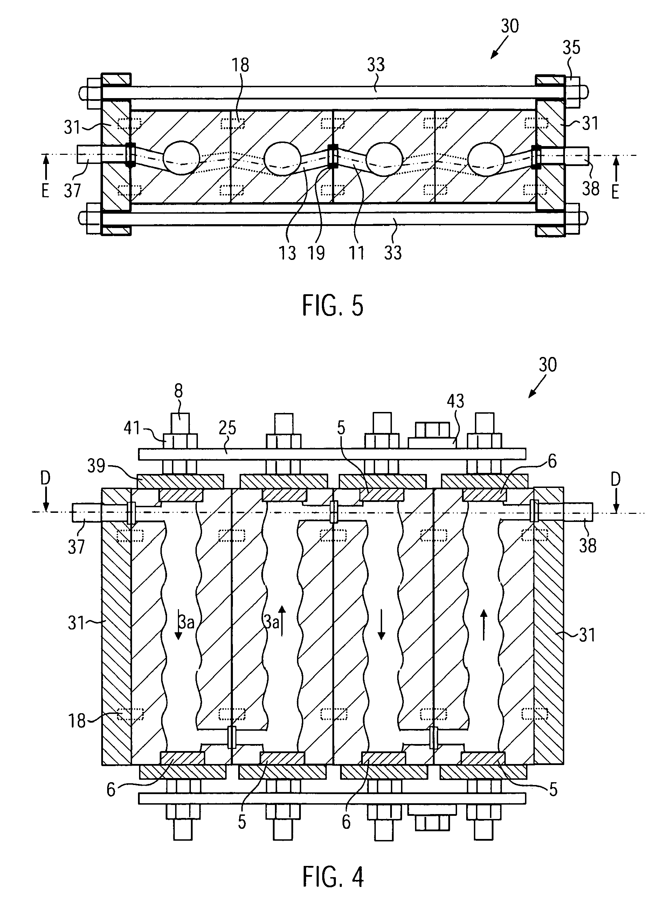

Zur Befestigung der Elektroden 5, 6, die bevorzugt aus Edelstahl hergestellt sind, kann an diesen beispielsweise ein Außengewinde vorgesehen sein sowie ein entsprechendes Innengewinde in den Ausnehmungen 23 (jeweils nicht gezeigt). Es sind aber auch andere Befestigungsarten möglich, wie die in Figur 4 angedeuteten Flansche 39.

Der Abstand 17 zwischen den Elektroden 5, 6 beträgt vorzugsweise 20 bis 500 mm. Durch geeignete Dimensionierung des Elektrodenabstands 17 kann das Heizmodul 2 bzw. eine Gruppe in Reihe geschalteter und identisch dimensionierter Heizmodule 2 an einen bestimmten Bereich der Produkttemperatur und einen bestimmten Volumenstrom flexibel angepasst werden. Damit eignet sich die Vorrichtung 1 insbesondere für Produkte 3 mit einem elektrischen Leitwert von 30 bis 10⁵ µS und zur Behandlung bei Temperaturen von bis zu 500°C.

In den Seitenflächen 12, 14 sind Führungseinrichtungen 18 vorgesehen, die beispielsweise Sacklöcher 18a und Führungsstifte 18b umfassen können. Die Positionen der Führungseinrichtungen 18 auf den entgegen gesetzten Seiten 12, 14 entsprechen einander derart, dass zwei gleichartige Heizmodule 2 an den Seiten 12, 14 aneinander gesteckt werden können, wenn das eine Heizmodul 2 gegenüber dem zweiten Heizmodul 2 um eine Normale 12a auf die Seitenfläche 12 um 180° gedreht wird.

Auch die Eintritts- bzw. Austrittsöffnungen 11a, 13b sind einander entsprechend angeordnet, so dass bei um 180° gegeneinander verdrehten und zusammengesteckten Heizmodulen 2 die Austrittsöffnung 13b des einen Moduls 2 der Eintrittsöffnung 11a des anderen Moduls 2 gegenüber liegt. Zur Abdichtung kann an den Öffnungen 11a, 13b jeweils eine Ausnehmung 11f, 13f zur Aufnahme einer gemeinsamen ringförmigen Dichtung 19 vorgesehen sein. Vorzugsweise sind die Ausnehmungen 11f, 13f gleich tief ausgebildet, so dass die Dichtung 19 beim Zusammenstecken zweier Module 2 diese gegeneinander abdichtet.

Das Heizmodul 2 ist insbesondere an seinen produktseitigen Oberflächen aus einem für Lebensmittel unbedenklichen, dielektrischen Werkstoff hergestellt, insbesondere aus hochtemperaturfestem Kunststoff, Glas oder Keramik.

Die Elektrodenanschlüsse 8 können beispielsweise als Gewindestifte ausgeführt sein, die in die Elektroden 5, 6 eingeschraubt werden. Die Elektrodenanschlüsse 8 sind so angeordnet, dass sie bei einer Aneinanderreihung von Heizmodulen 2 wie zuvor beschriebenen jeweils in einer Linie angeordnet sind, wodurch eine gemeinsame elektrische Verbindung beispielsweise mit einem gelochten Leiterblech 25, wie in Fig. 4 angedeutet, auf einfache Weise hergestellt werden kann.

Die Wechselstromquelle 7 kann beispielsweise bei einer Frequenz von 200 kHz arbeiten. Aufgrund der flexiblen Anpassbarkeit der Heizmodule 2 durch Variation des Elektrodenabstands 17 kann die Vorrichtung jedoch bei unterschiedlichen Frequenzen arbeiten.

Bei den in der Praxis zu behandelnden Volumenströmen kann eine gewünschte Behandlungstemperatur oftmals nur mit einer produktseitigen Reihenschaltung mehrerer Heizstufen 30 erzielt werden, indem das Produkt beispielsweise in einer ersten Heizstufe auf 40°C, in einer zweiten Stufe auf 60°C und in einer dritten Stufe auf 80°C erhitzt wird. Die bevorzugte Temperaturerhöhung des Produkts 3 pro Heizstufe 30 beträgt 1 bis 20°C. Für eine ausreichende Heizleistung umfasst dabei jede Heizstufe 30 in der Regel wiederum mehrere in Reihe geschaltete Heizmodule 2, beispielsweise zehn. Hierbei ist es aus Gründen der Kostenersparnis und einer einfachen Prozesskontrolle wünschenswert, dass die Heizmodule 2 aller Heizstufen 30 von einer gemeinsamen Wechselstromquelle 7 parallel versorgt werden.

Die Anpassung der einzelnen Heizmodule 2 an die Wechselstromquelle 7, an den Leitwert und den Volumenstrom des Produkts 3 sowie an den Temperaturbereich der jeweiligen Heizstufe 30 erfolgt durch geeignete Dimensionierung des Elektrodenabstands 17, wobei dieser bei den Heizmodulen 2 einer Stufe 30 vorzugsweise identisch ist. Bei einer Reihenschaltung der Heizstufen 30 ist der Elektrodenabstand 17 umso größer je höher die Produkttemperatur bzw. der Temperaturbereich der jeweiligen Heizstufe ist. Ebenso werden die Heizmodule 2 bzw. die Heizstufen 30 bei Bedarf an den Leitwert des Produkts 3 angepasst, indem der Elektrodenabstand 17 umso größer gewählt wird, je größer der Leitwert ist.

Der Vorteil der Erfindung liegt nun gerade darin, dass die Anpassung der Heizmodule 2 bei einer besonders einfachen, einheitlichen Wechselstromversorgung möglich ist, und dass gleichzeitig in den Heizmodulen 2 eine starke bzw. turbulente Strömung 3b kontrolliert erzeugt werden kann, so dass das Produkt 3 effizient und gleichmäßig erwärmt und gleichzeitig ein Selbstreinigungseffekt erzielt wird. Die Form der Heizmodule 2 und die Lage der Eintritts- bzw. Austrittsöffnungen 11a, 13b sowie der Elektrodenanschlüsse 8 ermöglichen zudem eine einfache Kombination der Heizmodule 2 zu kompakten Heizstufen 30 mit einer geringen Zahl erforderlicher Verbindungselemente. Außerdem können Wärmeverluste innerhalb einer Heizstufe 30 durch die Aneinanderreihung der Module 2 minimiert und somit der Wirkungsgrad der Vorrichtung 1 optimiert werden.

Die Figuren 4 und 5 zeigen eine Heizstufe 30 bestehend aus vier Heizmodulen 2 im Teilschnitt von oben bzw. von vorne. Demnach sind die Heizmodule 2 vorzugsweise quaderförmig und werden durch seitliche Spannflansche 31, Zugstangen 33 und Pressmuttern 35 zusammengedrückt. Dadurch wird gleichzeitig eine wasserdichte Reihenschaltung der Behandlungskanäle 4 erreicht, wobei an den Spannflanschen 31 ein Produktzulauf 37 bzw. ein Produktablauf 38 vorgesehen ist. Die Elektroden 5, 6 sind im Beispiel durch die Befestigungsflansche 39 an den Stirnseiten 21, 22 der Heizmodule angeschraubt (Verschraubung nicht gezeigt), die Elektrodenanschlüsse 8 mit Verschraubungen 41 durch die Leiterbleche 25 verbunden und an elektrische Wechselstromzuleitungen 43 in herkömmlicher Weise angeschlossen.

Die Führungseinrichtungen 18 sind lediglich gestrichelt angedeutet, die Dichtungen 19 zwischen den Eingangskanälen 11 und den Ausgangskanälen 13 der Übersichtlichkeit halber nur in Fig. 5 gezeigt.

Die Merkmale der beschriebenen Ausführungsformen können beliebig miteinander kombiniert werden. Es ist allerdings nicht zwingend erforderlich, das Produkt 3 tangential in den Behandlungskanal 4 einzuleiten. Auch die schraubenförmige Vertiefung 15 in der Wand 4c des Behandlungskanals 4 ist nicht obligatorisch. Beide Merkmale können je nach Beschaffenheit des Produkts 3 bzw. der Gefahr einer Ablagerung von Produktresten einzeln oder gemeinsam eingesetzt werden, um eine ausreichend starke, insbesondere turbulente Strömung zu initiieren bzw. aufrecht zu erhalten.

Die Heizmodule 2 können in beliebiger Orientierung betrieben werden, so dass die verwendeten Lagebezeichnungen wie oben, unten usw. nur der besseren Verständlichkeit dienen.

Mit der erfindungsgemäßen Vorrichtung 1 kann wie folgt gearbeitet werden:
Ein zu behandelndes Produkt 3, wie beispielsweise ein Milchgetränk, insbesondere ein Produkt, dass sich zur Behandlung bei turbulenter Strömung eignet, wir kontinuierlich durch vorzugsweise mehrere in Reihe geschaltete Heizstufen 30 geleitet und damit einer thermischen Behandlung, insbesondere zur Erhöhung der Produkthaltbarkeit, unterzogen. Dabei strömt das Produkt durch einzelne Heizmodule 2 mit einer so starken bzw. turbulenten Strömung 3b, dass das Produkt 3 gleichmäßig erwärmt wird und Produktablagerungen in den Heizmodulen 2 vermieden werden.

Die Erwärmung erfolgt durch elektromagnetische Wechselfelder in den Heizmodulen 2, wobei die Felder jeweils zwischen der eingangsseitigen und der ausgangsseitigen Elektrode 5,6 jedes Heizmoduls 2 erzeugt werden. Dabei strömt das Produkt im Behandlungskanal 4 schraubenförmig entlang der Hauptströmungsrichtung 3a von der eingangsseitigen Elektrode 5 zur ausgangsseitigen Elektrode 6, um die Strömung auch bei verschiedenen Elektrodenabständen 17 einstellen und kontrollieren zu können. Die Heizleistung der einzelnen Heizstufen 30 wird im Wesentlichen durch Dimensionierung des jeweiligen Elektrodenabstands 17 aufeinander abgestimmt, so dass die Heizstufen von einer gemeinsamen Wechselstromquelle 7 parallel versorgt werden können.

## Patentansprüche

1. Vorrichtung (1) zum Erhitzen eines strömenden Produkts (3), insbesondere eines Grundstoffs für die Getränkeindustrie, und insbesondere eines Milch- oder Milchmischgetränks, mit:
a) mindestens einem Heizmodul (2), in dem ein von dem Produkt (3) zu durchströmender Behandlungskanal (4) ausgebildet ist;
b) einer Wechselstromquelle (7) zum Erzeugen eines elektromagnetischen Wechselfelds im Behandlungskanal (4); und
c) einem an dem Heizmodul (2) vorgesehenen Paar Elektroden (5, 6) zum Ausbilden des Wechselfelds zwischen den Elektroden (5, 6),
**dadurch gekennzeichnet, dass**
der Behandlungskanal (4) zwischen den Elektroden (5, 6) derart ausgebildet ist, dass das Produkt (3) im Wesentlichen in einer Hauptströmungsrichtung (3a) von der ersten Elektrode (5) zur zweiten Elektrode (6) fließt.

2. Vorrichtung nach Anspruch 1, **dadurch gekennzeichnet, dass** die Elektroden (5, 6) im Wesentlichen als plattenförmige Deckel ausgebildet sind, die in und/oder auf den Enden (4a, 4b) des Behandlungskanals (4) sitzen und diesen verschließen.

3. Vorrichtung nach Anspruch 1 oder 2 , ferner **gekennzeichnet durch** einen seitlich in den Behandlungskanal (4) mündenden Eintrittskanal (11) mit einem Abschnitt (11d), der an die Wand (4c) des Behandlungskanals (4) derart anschließt, dass das Produkt (3) im Wesentlichen tangential an der Wand (4c) des Behandlungskanals (4) entlang einströmt.

4. Vorrichtung nach Anspruch 3, **dadurch gekennzeichnet, dass** der Querschnitt des Eintrittskanals (11) umso viel kleiner als der Querschnitt des Behandlungskanals (4) ist, dass das Produkt (3) im Wesentlichen nur auf einer Seite der Hauptachse (4d) des Behandlungskanals (4) einströmt.

5. Vorrichtung nach Anspruch 4 oder 5, **dadurch gekennzeichnet, dass** der Abstand (16) zwischen dem Eintrittskanal (11) und der eingangsseitigen Elektrode (5) höchstens 1 mm beträgt.

6. Vorrichtung nach mindestens einem der vorigen Ansprüche, ferner **gekennzeichnet durch** einen seitlich in den Behandlungskanal (4) mündenden Austrittskanal (13) mit einem Abschnitt (13d), der an die Wand (4c) des Behandlungskanals (4) derart anschließt, dass das Produkt (3) im Wesentlichen tangential an der Wand (4c) des Behandlungskanals (4) entlang ausströmt.

7. Vorrichtung nach mindestens einem der vorigen Ansprüche, **dadurch gekennzeichnet, dass** im Behandlungskanal (4) eine schraubenförmige Vertiefung (15) ausgebildet ist, die das Produkt (3) in der Hauptströmungsrichtung (3a) einer Schraubenlinie folgend an der Innenwand (4c) des Behandlungskanals (4) entlang leitet.

8. Vorrichtung nach mindestens einem der vorigen Ansprüche, **dadurch gekennzeichnet, dass** in einer ersten Außenseitenfläche (12) des Heizmoduls (2) eine Eintrittsöffnung (11a) für das Produkt (3) und in einer zweiten, entgegen gesetzten Außenseitenfläche (14) eine Austrittsöffnung (13b) für das Produkt (3) derart ausgebildet sind, dass mindestens zwei Heizmodule (2) an den Seitenflächen (12, 14) aneinander gereiht werden können, so dass die Austrittsöffnung (13b) des ersten Heizmoduls (2) gegenüber der Eintrittsöffnung (11a) des zweiten Heizmoduls (2) zu liegen kommt, um die Behandlungskanäle (4) der Heizmodule (2) in Reihe zu verbinden, wobei die Hauptströmungsrichtungen (3a) des ersten und des zweiten Heizmoduls (2) im Wesentlichen einander entgegen gesetzt sind.

9. Vorrichtung nach mindestens einem der vorigen Ansprüche, **dadurch gekennzeichnet, dass** der Abstand (17) zwischen den Elektroden (5, 6) 20 bis 500 mm beträgt.

10. Vorrichtung nach mindestens einem der vorigen Ansprüche, **dadurch gekennzeichnet, dass** sie mindestens zwei bezüglich des Produktstroms in Reihe geschaltete Heizstufen (30) mit jeweils mindestens einem Heizmodul (2) umfasst, wobei der Abstand (17) zwischen den Elektroden (5, 6) einer Heizstufe im Wesentlichen gleich groß und um so größer ist, je höher die mittlere Produkttemperatur in der jeweiligen Heizstufe (30) ist.

11. Vorrichtung nach Anspruch 10, **dadurch gekennzeichnet, dass** die Elektroden (5, 6) der Heizmodule (2) unterschiedlicher Heizstufen (30) parallel an die Wechselstromquelle (7) angeschlossen sind.

12. Verfahren zum Erhitzen eines strömenden Produkts (3), insbesondere eines Grundstoffs für die Getränkeindustrie, und insbesondere eines Milch- oder Milchmischgetränks, mit folgenden Schritten:
a) Kontinuierliches Durchleiten des Produkts (3) durch einen in einem Heizmodul (2) ausgebildeten Behandlungskanal (4);
b) Erzeugen eines elektromagnetischen Wechselfelds im Behandlungskanal (4) zwischen zwei an dem Heizmodul (2) vorgesehenen Elektroden (5, 6), um das Produkt (3) zu erhitzen
**dadurch gekennzeichnet, dass**
dass das Produkt (3) im Wesentlichen in einer Hauptströmungsrichtung (3a) von der ersten Elektrode (5) zur zweiten Elektrode (6) fließt.

13. Verfahren nach Anspruch 12, **dadurch gekennzeichnet, dass** in dem Behandlungskanal (4) eine schraubenförmige Produktströmung (3b) erzeugt wird.

14. Verfahren nach Anspruch 12 oder 13, **dadurch gekennzeichnet, dass** der Abstand (17) zwischen den Elektroden (5, 6) an die mittlere Produkttemperatur im Behandlungskanal (4) angepasst wird, um mehrere, produktseitig in Reihe geschaltete Heizmodule (2) mit unterschiedlicher mittlerer Produkttemperatur an einer gemeinsamen Wechselstromquelle (7) zu betreiben.

15. Verfahren nach mindestens einem der Ansprüche 12 bis 14, **dadurch gekennzeichnet, dass** der Abstand (17) zwischen den Elektroden (5, 6) an den elektrischen Leitwert des Produkts (3) angepasst wird, wobei der Leitwert 30 µS bis 10⁵ µS betragen kann.
